## Europäisches Patentamt

## European Patent Office

## Office européen des brevets

(11) Veröffentlichungsnummer: **0 043 911**
**B1**

(12) ## EUROPÄISCHE PATENTSCHRIFT

(45) Veröffentlichungstag der Patentschrift:
**18.12.85**

(51) Int. Cl.⁴: **C 08 F 220/12, C 09 D 5/02 //**
**(C08F220/12, 220:04, 212:00)**

(21) Anmeldenummer: **81104264.7**

(22) Anmeldetag: **03.06.81**

(54) **Copolymerisat und seine Verwendung als Bindemittel für wasserverdünnbare, physikalisch trocknende Zusammensetzungen.**

(30) Priorität: **19.06.80 DE 3022870**

(43) Veröffentlichungstag der Anmeldung:
**20.01.82 Patentblatt 82/3**

(45) Bekanntmachung des Hinweises auf die Patenterteilung:
**18.12.85 Patentblatt 85/51**

(84) Benannte Vertragsstaaten:
**AT BE DE FR GB IT NL SE**

(56) Entgegenhaltungen:
**FR - A - 1 384 246**

(73) Patentinhaber: **BASF Aktiengesellschaft,
Carl-Bosch-Strasse 38, D-6700 Ludwigshafen (DE)**

(72) Erfinder: **Dersch, Rolf, Dr., Seckenheimer Strasse 11-13,
D-6800 Mannheim (DE)**
Erfinder: **Loch, Werner, Dr., In der Bleiche 2,
D-6701 Erpolzheim (DE)**
Erfinder: **Neubert, Gerhard, Dr., Panoramastrasse 11,
D-6719 Battenberg (DE)**
Erfinder: **Wistuba, Eckehardt, Dr., Im Obergarten 7,
D-6702 Bad Duerkheim (DE)**

## Beschreibung

Die vorliegende Erfindung betrifft ein Copolymerisat und seine Verwendung als Bindemittel für wasserverdünnbare, physikalisch trocknende Zusammensetzungen, insbesondere für Anstrichstoffe und Imprägniermittel nach DIN 55 945 mit besonders geringer Wasserquellbarkeit.

Es ist bekannt, Anstrichstoffe auf Basis von Polymerisatharzen durch Einbau saurer Gruppen, die in der Regel mit flüchtigen organischen Aminen in Salzgruppen überführt werden, wasserverdünnbar zu machen. Die Anwesenheit dieser Salzgruppen in Bindemitteln des bekannten Standes der Technik bedingt jedoch, dass die damit erhaltenen Anstriche so wasserempfindlich bleiben, dass sie bei Beanspruchung durch Feuchtigkeit relativ hohe Mengen Wasser aufnehmen und beispielsweise für den Schutz von Bauten und Konstruktionsteilen gegen atmosphärische Einflüsse, wie insbesondere für den Korrosionsschutz von Stahl und anderen Metallen wenig oder gar nicht geeignet sind.

So werden in der FR-PS 1 384 246 thermoplastische Copolymerisate für physikalisch trocknende Schutzüberzüge auf der Basis von Acrylsäureestern beschrieben, die sich nach Neutralisation der einpolymerisierten Monocarbonsäuren mit Aminen bzw. Ammoniak in Wasser bzw. Mischungen von organischen Lösungsmitteln mit Wasser lösen lassen. Schutzüberzüge, die aus diesen Lösungen hergestellt werden, sind zwar gegen Anlösung durch Wasser beständig; sie quellen jedoch bei langzeitiger Beanspruchung durch Wasser so stark, dass sie als alleinige Korrosionsschutzüberzüge gegen Wettereinflüsse nicht in Frage kommen. Ausserdem macht die leichte Ablösbarkeit derartiger Überzüge durch bereits schwache wässrige Basen, wie wässriger Ammoniak, die Anwendung der Copolymerisate als Bindemittel für physikalisch trocknende Korrosionsschutzbeschichtungen ungeeignet.

Um in solchen Fällen dennoch wasserresistente Anstriche zu erhalten, muss man hitzereaktive Vernetzer, wie z. B. Aminoplast- oder Epoxidharze zusetzen, die jedoch Härtungstemperaturen von über 70°C erfordern. Derartige Einbrennlacke sind beispielsweise in der CA-PS 998 790 beschrieben. Abmischungen mit Epoxidharzen andererseits sind begrenzt lagerfähig und lassen sich nur als 2-Komponentenlacke verarbeiten.

Wasserfestigkeit bei Raumtemperatur kann bestenfalls erreicht werden, wenn die salzgruppenreichen Bindemittel oxidativ vernetzbare Gruppierungen, wie z. B. Fettsäuren natürlich vorkommender trockener Öle eingebaut enthalten. Derartige Anstrichmittel sind beispielsweise in der JA-OS 52 081–344 sowie der FR-PS 1 596 677 beschrieben. Wie aus letzterer hervorgeht, haben solche Anstrichmittel sehr lange Trocknungszeiten. Ausserdem altern, verspröden und vergilben die resultierenden Anstriche bekanntermassen schnell unter Hitze und Witterungseinfluss. Hinzu kommen die für die oxidativ trocknenden Bindemittel bekannten weiteren nachteiligen Eigenschaften, wie Hautbildung in angebrochenen Gebinden, Hochziehen der Anstriche beim Überstreichen, Unlöslichkeit der angetrockneten Anstriche und ungenügende Beständigkeit gegen verseifende Chemikalien.

Um die letztgenannten Nachteile sowie hohe Härtungstemperaturen zu umgehen, bleibt die physikalische Trocknung von Emulsionspolymerisaten, wie sie beispielsweise in der FR-PS 2 015 588 beschrieben werden. Bei diesen Dispersionsfarben findet Filmbildung bei Raumtemperatur durch Verschweissen der emulgierten kugeligen, weichen Polymerteilchen während der fortschreitenden Konzentrierung durch Wasserverdunstung statt. Dadurch ergeben sich jedoch Nachteile. Zur Filmbildung ist eine Mindestfilmbildetemperatur erforderlich. Die Lackfilme bleiben relativ weich und wenig blockfest und es ist schwierig, hochglänzende Überzüge zu erhalten. Hinzu kommt, dass Anstriche aus Emulsionspolymerisaten bekanntermassen aufgrund deren Gehaltes an Emulgatoren und weiterer wasserlöslicher Hilfsstoffe, die für die Lagerstabilität dieser Anstrichstoffe meist erforderlich sind, wie Verdickungs- und Pigmentdispergiermittel, eine starke Wasserquellbarkeit zurückbehalten. Diese Anstriche bieten daher nur einen eingeschränkten Schutz gegen atmosphärische Einflüsse.

Der vorliegenden Erfindung lag nun die Aufgabe zugrunde, ein Copolymerisat aufzuzeigen, das für bei Raumtemperatur physikalisch trocknende, wasserverdünnbare Anstrichstoffe und Imprägniermittel zu verwenden ist, die frei von den Nachteilen des oben zitierten Standes der Technik sind.

Gegenstand der vorliegenden Erfindung ist ein Copolymerisat, im wesentlichen bestehend aus einpolymerisierten Einheiten von

a) 67 bis 98 Gew.-% mindestens eines Esters der Acrylsäure oder Methacrylsäure mit einem 1 bis 14 Kohlenstoffatome enthaltenden geradkettigen oder verzweigten Monoalkanol,

b) 2 bis 20 Gew.-% mindestens einer copolymerisierbaren, olefinisch ungesättigten 3 bis 10 Kohlenstoffatome enthaltenden Verbindung mit mindestens einer Carboxyl- oder Carbonsäureanhydridgruppe,

c) 0 bis 31 Gew.-% eines Vinylaromaten und

d) 0 bis 5 Gew.-% weiterer, unter a) bis c) nicht genannter $\alpha,\beta$-ethylenisch ungesättigter Verbindungen,

mit der Massgabe, dass die Summe der unter a) bis d) genannten Prozentzahlen gleich 100 ist, dadurch gekennzeichnet, dass das Copolymerisat einen K-Wert nach DIN 53 726 von 18 bis 60 aufweist und die Komponenten a), b), c) und d) in einem solchen Verhältnis einpolymerisiert enthält, dass dem Copolymerisat ein A-Wert zwischen 180 und 220 entspricht, wobei der A-Wert sich aus folgender Gleichung berechnen lässt:

$$100 \cdot \log SZ + 1{,}6 \cdot \sum_{i=1}^{n} E_i = A$$

worin

SZ die Säurezahl in mg KOH/g Copolymerisat und

$$\sum_{i=1}^{n} E_i$$

die Summe der korrigierten Anteile $E_1$ bis $E_n$ der jeweiligen Alkyl(Meth)Acrylatcomonomere a)1 bis a)n an COO-Gruppierungen, jeweils in Gew.% bezogen auf das Copolymerisat bedeuten und die Gew.%-Anteile so korrigiert werden, dass sie für Ester in α-Stellung verzweigter Alkanole mit dem Faktor 0,7 bzw. für Ester in β-Stellung verzweigter Alkanole mit dem Faktor 0,8 multipliziert worden sind.

Gegenstand der vorliegenden Erfindung ist ausserdem die Verwendung des erfindungsgemässen Copolymerisats als Bindemittel für wasserverdünnbare, physikalisch trocknende Zusammensetzungen, insbesondere für Anstrichstoffe und Imprägnierungen, wobei das erfindungsgemässe Copolymerisat in mit Wasser zumindest teilweise mischbaren organischen Lösungsmitteln gelöst und mit Ammoniak zumindest teilweise neutralisiert ist. Die erfindungsgemässen Copolymerisate können im allgemeinen Säurezahlen zwischen etwa 20 und 100 aufweisen.

Mit dem erfindungsgemässen Copolymerisat lassen sich Anstrichstoffe und Imprägniermittel herstellen, die beliebig oder zumindest mit hohen Anteilen wasserverdünnbar sind, wobei das Stadium der kolloidalen Lösung praktisch nie verlassen wird. Die mit den erfindungsgemässen Überzugsmitteln erhaltenen Anstriche sind schon unmittelbar nach dem Antrocknen bei gewöhnlichen Innen- und Aussentemperaturen wasserabweisend und gegen Wassereinwirkung beständig.

Nach Durchtrocknung entstehen Lackfilme, die sich im Gegensatz zu den mit organischen Aminen neutralisierten Copolymerisaten durch überraschend geringe Wasserquellbarkeit auszeichnen, wie sie sonst nur von organisch löslichen Bindemitteln bekannt ist.

Die durchgetrockneten Lackfilme zeichnen sich überdies durch ausgezeichnete Beständigkeit gegen wässrige Basen aus, wie z.B. gegen langzeitige Einwirkung von wässrigem Ammoniak oder 1-normaler Natronlauge bei Raumtemperatur.

Es war ausserdem überraschend, dass die Copolymerisate sich in wässrig ammoniakalischem Isopropanol lösen lassen, obwohl sie in Isopropanol allein bei 20 °C im allgemeinen nicht oder nur unvollständig löslich sind. Die Eignung von Ammoniak als Neutralisationsmittel bringt zudem den Vorteil, dass Ammoniak im Gegensatz zu organischen Aminen keine toxikologischen Probleme verursacht.

Die aus dem erfindungsgemässen Copolymerisat hergestellten Anstrichstoffe sind langzeitig lagerfähig, problemlos miteinander überlackierbar und auch auf nassen Untergründen noch anwendbar. Mit ihnen erhaltene Anstriche zeichnen sich durch hervorragende Witterungsbeständigkeit, hohe Hitzestabilität, gute Haftfestigkeit auf verschiedenen Untergründen sowie gute mechanische Eigenschaften und Blockfestigkeit trotz niedrigem K-Wert aus. Sie gewährleisten daher einen ausgezeichneten Schutz für Bauten und Konstruktionsteile aus Metallen sowie organischen und mineralischen Materialien gegen Korrosion. In den erfindungsgemässen Überzugsmitteln liegt optimale Pigmentbenetzung vor, so dass hochglänzende Anstriche erhalten werden. Das ist ein bedeutender Fortschritt gegenüber herkömmlichen Dispersionsfarben.

Darüber hinaus ermöglichen diese Bindemittel, den Anteil an organischen Lösungs- und Verdünnungsmitteln zu physikalisch trocknenden Anstrichstoffen beträchtlich zu reduzieren. Dadurch lassen sich Kosten einsparen, die Belastung der Umwelt durch Lösungsmittel verringern und die Handhabung der Anstrichstoffe ungefährlicher einstufen.

Zu den Aufbaukomponenten des erfindungsgemässen Copolymerisats ist folgendes auszuführen:

a) Als Ester der Acrylsäure oder Methacrylsäure mit einem 1 bis 14 Kohlenstoffatome enthaltenden geradkettigen oder verzweigten Monoalkanol eignen sich z.B. Methylacrylat, Ethylacrylat, Isopropylacrylat, Methylmethacrylat, n-Butylacrylat, n-Butylmethacrylat, Isobutylacrylat, Isobutylmethacrylat, tert.-Butylacrylat, 2-Ethylhexylacrylat, 2-Ethylhexylmethacrylat, Laurylacrylat sowie deren Gemische. Bevorzugt sind n-Butylacrylat, Isobutylacrylat und 2-Ethylhexylacrylat.

Komponente (a) besteht vorzugsweise aus einer Mischung von mindestens einem hart machenden Monomeren (a1), wie z.B. Methylmethacrylat, Isobutylmethacrylat oder tert.-Butylacrylat und mindestens einem weichmachenden Monomeren (a2), wie z.B. Acrylsäureestern der $C_2$- bis $C_{14}$-Monoalkohole.

Bevorzugte Komponente (a1) ist tert.-Butylacrylat, in Mengen zwischen 30 und 90 Gew.% einpolymerisiert. Besonders bevorzugt ist Isobutylmethacrylat in Mengen zwischen 25 und 95%, vorzugsweise 35 bis 80%.

Bevorzugte Komponenten (a2) sind n-Butylacrylat und längerkettige (Meth)acrylsäureester. Besonders bevorzugt sind verzweigte Acrylsäureester wie z.B. 2-Ethylhexylacrylat und Isobutylacrylat.

Durch Einpolymerisation von Isobutylmethacrylat werden überraschenderweise erfindungsgemässe Copolymerisate erhalten, deren Lackfilme sich durch besonders hohe Wasserresistenz schon während der Antrocknungsphase auszeichnen. Ihre Lackfilme sind schon während des Trocknens besonders hydrophob und wasserweissanlaufbeständig. Ihre Anstriche benetzen die verschiedensten Untergründe besonders gut und ergeben einen besonders guten Verlauf.

Komponente (a) ist im erfindungsgemässen Copolymerisat in Mengen von 67 bis 98, vorzugsweise 91 bis 96 Gew.% einpolymerisiert.

b) Als Komponente (b) kommen copolymerisierbare olefinisch ungesättigte Verbindungen mit mindestens einer Carboxyl- oder Carbonsäureanhydridgruppe mit 3 bis 10 Kohlenstoffatomen in Frage, wie z.B. Acrylsäure, Methacrylsäure, Crotonsäure, Fumarsäure, Maleinsäure, Itaconsäure bzw. die Anhydride dieser Dicarbonsäuren.

Die Anhydridgruppen der Copolymerisate können vor dem Neutralisieren mit Ammoniak beispielsweise durch Erwärmen mit 1 bis 8 Kohlenstoffatome enthaltenden Alkoholen oder Glykolethern in die entsprechenden Halbestergruppen enthaltenden Copolymerisate übergeführt werden. Beispiele für solche Alkohole bzw. Gylkolether sind Ethanol, Isopropanol, Butanol und Butylglykol. Bevorzugte Komponenten (b) sind Acrylsäure, Itaconsäure und Maleinsäureanhydrid.

Komponente (b) ist im Copolymerisat in Mengen von 2 bis 20, insbesondere 2 bis 15 Gew.-% einpolymerisiert. Acrylsäure ist vorzugsweise in Mengen von 4 bis 9, Methacrylsäure vorzugsweise in Mengen von 5 bis 11 Gew.% einpolymerisiert.

c) Als Vinylaromaten (c) eignen sich z.B. Vinyltoluol und vorzugsweise Styrol. Komponente (c) kann im erfindungsgemässen Copolymerisat in einer Menge von bis zu 31 Gew.% einpolymerisiert sein, wenn nicht besonders hohe Ansprüche an die Witterungsbeständigkeit gestellt werden.

d) Bei der Komponente (d) handelt es sich um weitere α,β-ethylenisch ungesättigte Verbindungen, die nicht unter a) bis c) genannt sind und gegebenenfalls in Mengen bis zu 5 Gew.% im Copolymerisat einpolymerisiert sein können. Es sind dies beispielsweise Mono(meth)-acrylate von Alkandiolen, wie Hydroxyethyl- und Hydroxypropyl(meth)acrylat sowie Butandiomono(meth)acrylat, (Meth)acrylamid, (Meth)acrylnitril und/oder Vinylester wie Vinylacetat, Vinylpropionat und Vinylpivalat. Diese Monomeren können, falls erforderlich, zur Einstellung spezieller Eigenschaften dienen. Im allgemeinen wird aber die Verwendung von Copolymeren, die frei von Komponente d) sind, bevorzugt.

Die Summe der unter a) bis d) genannten Prozentzahlen ist 100.

Erfindungsgemäss weist das Copolymerisat einen K-Wert (gemessen 3%ig in Aceton) von 18 bis 60, vorzugsweise 22 bis 40, insbesondere 25 bis 32 auf, und enthält die Komponenten a), b), c) und d) in einem solchen Verhältnis einpolymerisiert, dass dem Copolymerisat ein A-Wert zwischen 180 und 220, vorzugsweise 190 bis 220 und insbesondere 200 bis 210, besonders 195 bis 205, entspricht, wobei der A-Wert sich aus folgender Gleichung berechnen lässt:

$$100 \cdot \log SZ + 1{,}6 \cdot \sum_{i=1}^{n} E_i = A$$

worin

SZ die Säurezahl in mg KOH/g Copolymerisat und

$$\sum_{i=1}^{n} E_i$$

die Summe der korrigierten Anteile $E_1$ bis $E_n$ der jeweiligen Alkyl(Meth)Acrylatcomonomere a)1 bis a)n an COO-Gruppierungen, jeweils in Gew.-% bezogen auf das Copolymerisat bedeuten und diese Gew.-%-Anteile so korrigiert werden, dass sie für Ester in α-Stellung verzweigter Alkanole mit dem Faktor 0,7 bzw. für Ester in β-Stellung verzweigter Alkanole mit dem Faktor 0,8 multipliziert worden sind.

Soweit die Ester der Acryl- oder Methacrylsäure nur Monoalkohole mit 1 bis 14 Kohlenstoffatomen enthalten, die nicht in α- oder β-Stellung verzweigt sind, wird der Wert E unverändert eingesetzt.

Für den Anteil an Estergruppen, die in α- oder β-Stellung zur Estergruppierung Kettenverzweigung aufweisen, erniedrigt er sich, und zwar für in α-Stellung verzweigte Alkanolester (z.B. tert.-Butylacrylat) um 30% und für in β-Stellung verzweigte Alkanolester (z.B. Isobutyl(meth)acrylat und 2-Ethylhexylacrylat) um 20%.

Für den Estergruppenanteil von in α-Stellung verzweigten Alkanolestern, z.B. tert.-Butylacrylat, des Copolymeren ist somit der Betrag

$$E = \frac{\text{Gew.\% COO-Esteranteil}}{100} \cdot 70$$

einzusetzen. Entsprechend ist für in β-Stellung verzweigte Alkanolester, z.B. für Isobutylmethacrylat bzw. Isobutylacrylat und 2-Ethylhexylacrylat

$$E = \frac{\text{Gew.\% COO-Esteranteil}}{100} \cdot 80$$

Bei höheren Werten im Bereich für A, z.B. über 220, geht die Wasserbeständigkeit der Filme zurück (hohe Wasseraufnahme, starke Wasserquellbarkeit, schlechter Korrosionsschutz), bei niedrigeren Werten im Bereich für A, z.B. unter 190, wird die Wasserverdünnbarkeit reduziert (Flokkung, Entstehung instabiler Dispersionen, Zweiphasenbildung). Die Säurezahlen der erfindungsgemässen Copolymerisate liegen im allgemeinen nicht über 90.

Die erfindungsgemässen Copolymerisate können beispielsweise Erweichungspunkte nach DIN 53 180 von 40 bis 150, vorzugsweise 55 bis 150, insbesondere 75 bis 110 °C aufweisen.

Bei hohen K-Werten (>40) ist die Wasserverdünnbarkeit der Copolymerisatlösungen deutlich geringer und es werden grössere Anteile hochsiedender Lösungsmittel zur Filmbildung benötigt.

Das erfindungsgemässe Copolymerisat lässt sich auf übliche Weise herstellen, bevorzugt durch Substanz- oder Lösungspolymerisation. Weniger geeignet sind die Suspensions- oder Emulsionspolymerisation, weil dann der gleichmässige Einbau der Komponente (b) erschwert ist.

Für die Verwendung des erfindungsgemässen Copolymerisats geeignete, mit Wasser zumindest teilweise mischbare organische Lösungsmittel sind z.B. Monoalkanole mit 1 bis 4 C-Atomen und/oder Oxamonoalkanole mit 3 bis 8, vorzugsweise 4 bis 7, insbesondere 5 bis 6 Kohlenstoffatomen, wie vorzugsweise Ethanol, Isopropanol, Isobutanol, n-Butanol und sec.-Butanol und Monoalkylglykolether mit 4 bis 7 C-Atomen, wie Monoether des Ethylenglykols, Propylenglykols, der Butandiole und/oder des Diethylenglykols mit Methanol, Ethanol, Propanolen und Butanolen, wie 3-Methoxy-butanol, Ethylglykol, Butylglykol (= Ethylenglykolmonobutylether), Monomethoxy- und Monoethoxypropylenglykole sowie Gemische dieser Lösungsmittel.

Ausserdem eignen sich die $C_6$- bis $C_8$-Diether des Diethylenglykols z.B. mit Methanol und Ethanol sowie N-Methylpyrrolidon.

Besonders bevorzugte Lösungsmittel sind Ethanol, Isopropanol, sec.-Butanol und Butylglykol.

Ketone, wie Aceton oder Diacetonalkohol, sind wegen ihrer Reaktivität gegenüber Ammoniak, und Ester, wie z.B. Methylglykolacetat, wegen ihrer begrenzten Verseifungsbeständigkeit ungeeignet bzw. weniger geeignet.

Teilweise mit Wasser mischbare Lösungsmittel werden entsprechend ihrer Mischbarkeit mit Wasser nur anteilweise im Lösungsmittel mitverwendet.

Mit Wasser nicht mischbare Lösungsmittel, wie z.B. Toluol und Xylol beeinträchtigen die Wasserverdünnbarkeit der erfindungsgemässen Bindemittellösungen beträchtlich. Ein Zusatz ist daher weniger empfehlenswert.

Bevorzugt werden Gemische aus wassermischbaren hochsiedenden Lösungsmitteln mit Verdunstungszahlen nach DIN 53 170 zwischen 50 und 600, vorzugsweise 100 bis 300, wie insbesondere Butylglykol und schneller als Wasser flüchtigen Lösungsmitteln wie bevorzugt Isopropanol, sec.-Butanol und Ethanol eingesetzt.

Die hochsiedenden Lösungsmittel werden im allgemeinen in Mengen von 10 bis 150 Gew.-%, vorzugsweise in Mengen zwischen 20 und 60 Gew.%, bezogen auf das Copolymerisat verwendet.

Für die erfindungsgemässe Verwendung des Copolymerisats für wasserverdünnbare Anstrichstoffe und Imprägniermittel wird das Copolymerisat mit zweckmässig 25 oder mehr, vorzugsweise 50 bis 200 Gew.%, bezogen auf Copolymerisat, des mit Wasser mindestens teilweise mischbaren organischen Lösungsmittels kombiniert.

Für die Verwendung des Copolymerisats als Bindemittel kann Wasser in Mengen von bis zu 1000, vorzugsweise 50 bis 400 Gew.%, bezogen auf Copolymerisat mitverwendet werden.

Als Neutralisationsmittel dient Ammoniak.

Der pH-Wert der wässrigen Lösungen des Copolymerisats ist im allgemeinen >7; vorzugsweise zwischen 7,5 und 9,5; insbesondere 8,0 bis 9,0.

Von dem als Neutralisationsmittel dienenden Ammoniak kann – zur Erzielung bestimmter Effekte – ein geringer Teil, zweckmässig nicht mehr als 25%, vorzugsweise nicht mehr als 10% des für die Neutralisation erforderlichen Ammoniaks, durch organische Amine, insbesondere Triethylamin ersetzt werden. Solche Zusätze erhöhen jedoch die Wasserquellbarkeit und die Wasserdurchlässigkeit der Anstriche.

Ausserdem können für die erfindungsgemässe Verwendung in der Lacktechnologie übliche Hilfs- und Zusatzstoffe mitverwendet werden, beispielsweise Pigmente und Füllstoffe, wie Titandioxid, Eisenoxide, Chromoxide, Schwermetallchromate, Bariumsulfat, Russ, Calcite, Dolomit, Talkum, Aluminiumbronze und organische Pigmente, andere in der Lacktechnologie übliche Hilfsstoffe, wie beispielsweise Entschäumer, Netzmittel, Antiabsetz- bzw. Thixotropiermittel, Verdicker, Gleitmittel und Weichmacher.

Zur Herstellung der Anstrichstoffe können die Copolymerisate in dem gegebenenfalls Wasser enthaltenden Lösungsmittel unter gleichzeitiger, vorheriger oder nachträglicher Neutralisation der Carboxylgruppen gegebenenfalls unter Erwärmen gelöst und anschliessend gegebenenfalls nach den üblichen Verfahren pigmentiert werden. Ein anderer Weg besteht in der Herstellung des Copolymerisats durch Lösungspolymerisation, wobei als Reaktionsmedium entweder organische Lösungsmittel der oben genannten Art oder Gemische derselben mit Wasser und Ammoniak geeignet sind. Anschliessend erfolgt Verdünnung mit Wasser sowie gegebenenfalls mit einem der oben beschriebenen organischen Lösungsmittel.

Das Anreiben der gegebenenfalls Wasser enthaltenden Lösungen mit Pigmenten und Füllstoffen kann vor oder nach der Neutralisation erfolgen. Zur Verbesserung der Pigmentbenetzung ist es vorteilhaft, möglichst wenig Wasser während des Anreibens mitzuverwenden.

Die erfindungsgemässen Copolymerisate werden bevorzugt als alleinige Bindemittel gegebenenfalls plastifiziert mit geringen Mengen üblicher Weichmacher angewendet. Eine weitere Anwendungsmöglichkeit besteht aber auch in der Kombination mit anderen bekannten Anstrichbindemitteln, um deren Eigenschaften in die eine oder andere Richtung abzuwandeln. Besonders bevorzugt ist dabei die Kombination mit bekannten Anstrichdispersionen, deren Bindemittel einen ähnlichen Monomerenaufbau besitzt, wie die erfindungsgemässen Copolymerisate. Auf diese Weise lassen sich beispielsweise der Glanz, der Verlauf, die Haftfestigkeit auf verschiedenen Substraten sowie die Wasserresistenz der bekannten Anstrichdispersionen verbessern.

Die Verarbeitung der erfindungsgemässen Überzugs- und Imprägniermittel erfolgt nach üblichen Methoden, wie Streichen, Spritzen, Rollen, Giessen, Tauchen und Walzen. Beispiele für die Anwendung der erfindungsgemässen Produkte sind Klarlacke und pigmentierte Anstrichstoffe zum Schutz verschiedenartiger Substrate, wie z.B. von Stahl oder anderen Metallen, von Mauerwerk, Beton, Asbestzement, Holz und Kunststoffen gegen atmosphärische und andere Einflüsse. Andere Einsatzgebiete sind

Verfestigung und Hydrophobierung saugender mineralischer Untergründe,

Kombinationsbindemittel für Dispersionsanstriche,

Verbesserung der Haftfestigkeit nachfolgender Anstriche und Beschichtungen,

Strassenmarkierungsfarben,

Beschichtungen von Teerpappe, Flachdächern und Dachziegeln. Die erfindungsgemässen Bindemittel sind aufgrund ihrer besonderen Eigenschaften für die Herstellung der folgenden Anstrichstoffe besonders geeignet. Korrosionsschutzgrundierungen und Deckanstriche, insbesondere für Stahl, Zink und Aluminium, Schutzfarben für Bitumen und teerhaltige Schichten wie z.B. für Dachbeschichtungen, Strassenmarkierungsfarben, Schutzfarben, Putze und Imprägnierungslösungen für Mauerwerk und ähnliche mineralische Werkstoffe, sowie Schutzfarben für Kunststoffe, Holz und zum Schutz anderer Anstriche.

Folgende Beispiele sollen den Gegenstand vorliegender Erfindung näher erläutern, ohne diesen einzuschränken.

Die in den Beispielen angegebenen Teile bzw.

Prozente beziehen sich, wenn nicht anders gekennzeichnet, auf das Gewicht.

1. Herstellung der Copolymeren:
Abkürzungen:

| | | |
|---|---|---|
| MMA | = | Methylmethacrylat |
| BA | = | Butylacrylat |
| i-BA | = | Isobutylacrylat |
| i-MBA | = | Isobutylmethacrylat |
| t-BA | = | tert.Butylacrylat |
| EH | = | 2-Ethylhexylacrylat |
| AS | = | Acrylsäure |

a) Substanzpolymerisate

20 Teile der Monomermischung gemäss Tabelle 1 und 10 Teile Xylol werden gerührt und unter Stickstoff auf 140 °C erwärmt. Sobald die Innentemperatur 140 °C erreicht hat, wird 1 Teil einer Lösung des Initiators in 10 Teilen Xylol zugegeben. Nach 10 Minuten werden die verbliebenen 80 Teile Monomermischung binnen 4 Stunden und die restliche Initiatorlösung innerhalb 4½ Stunden gleichmässig zugetropft. Bei 140 °C Badtemperatur wird 1 Stunde nachpolymerisiert und anschliessend Xylol und Restmonomere im Vakuum abdestilliert.

Tabelle 1

| Beispiel | Monomerzusammensetzung | Initiator |
|---|---|---|
| 1 | 64 Teile MMA<br>33 Teile BA<br>3 Teile AS | 2 Teile t-BPB (= Butyl-<br>perbenzoat) |
| 2 | 62,5 Teile MMA<br>33 Teile BA<br>4,5 Teile AS | 2 Teile t-BPB |
| 3[1] | 56 Teile MMA<br>40 Teile i-BA<br>4 Teile AS<br>(+0,5 Teile t-Dodecylmerkaptan<br>als Regler) | 2 Teile t-BPB |
| 4 | 86 Teile i-BMA<br>10 Teile EHA<br>4 Teile AS | 1 Teil t-BPB |

[1] Abweichend von der oben angegebenen Verfahrensweise wurde in Beispiel 3 die Monomerenmischung binnen 2 Stunden, die Initiatorlösung innerhalb von 2½ Stunden bei 130°C Badtemperatur zugetropft, dann bei 140°C Badtemperatur 2 Stunden nachpolymerisiert.

b) Lösungspolymerisate in Butylglykol

26 Teile einer Lösung der Monomeren gemäss Tabelle 2 in 30 Teilen Butylglykol und 0,15 Teile tert.-Butylperoctoat (= t-BPOct.) gelöst in 2 Teilen Butylglykol wurden gerührt und unter Stickstoff auf 100 °C erwärmt. Dann wurden die verbliebene Lösung der Monomeren binnen 2½ Stunden und 1,35 Teile t-BPOct. gelöst in 18 Teilen Butylglykol innerhalb von 3 Stunden gleichmässig zugetropft. Anschliessend wird 4 Stunden bei 120 °C nachpolymerisiert.

Tabelle 2

| Beispiel | Monomerenzusammensetzung |
|---|---|
| 5 | 75 Teile i-BMA<br>20 Teile EHA<br>5 Teile AS |
| 6 | 73 Teile i-BMA<br>20 Teile EHA<br>7 Teile AS |
| 7 | 83 Teile t-BA<br>10 Teile EHA<br>7 Teile AS |

c) Lösungspolymerisat in i-Propanol
(= Beispiel 8)

40 Teile einer Lösung von 62,5 Teilen MMA, 33 Teilen BA und 4,5 Teilen AS in 80 Teilen i-Propanol werden gerührt und unter Stickstoff erwärmt. Bei 75°C Innentemperatur wurde die restliche Monomerlösung binnen 2 Stunden und die Initiatorlösung, bestehend aus 1 Teil BPO (= Benzoylperoxid), 6 Teilen Methylethylketon und 14 Teilen i-Propanol im Verlauf von 2½ Stunden gleichmässig zugetropft. Anschliessend wird 2 Stunden bei 80°C nachpolymerisiert.

Die resultierenden Copolymerisate sind in Tabelle 3 charakterisiert:

Tabelle 3

| Beispiel Nr. | 1 | 2 | 3 | 4 | 5 | 6 | 7 | 8 |
|---|---|---|---|---|---|---|---|---|
| Lösungsmittel: | – | – | – | – | Butylglykol | | | Isopropanol |
| Copolymer-Konzentration (%): | 100 | 100 | 100 | 100 | 66,6 | 66,6 | 66,6 | 50 |
| E (%)[1] | 39,4 | 38,9 | 35,6 | 23,2 | 22,4 | 21,9 | 21,9 | 38,9 |
| SZ (mg KOH/g) | 23 | 35 | 30 | 31 | 39 | 55 | 55 | 35 |
| Konstante A | 199 | 217 | 205 | 186 | 195 | 209 | 209 | 217 |
| K-Wert | 25 | 25 | 25 | 24 | 29 | 30 | 25 | 39 |
| Erweichungspunkt (°C) des lösungsmittelfreien Copolymeren | 85 | 91 | 90 | 96 | 105 | 105 | 82 | 108 |

[1] Die angegebenen Werte sind bereits mit den Faktoren für die in $\alpha$- bzw. $\beta$-Stellung verzweigten Alkanole korrigiert.

2. Herstellung von Klarlacken unter Verwendung der Polymerisate der Beispiele 1 bis 4 2.1 100 Teile der Copolymerisate der Beispiele 1 bis 4 werden jeweils in 50 Teilen Butylglykol und 100 Teilen Isopropanol unter Erwärmen gelöst und mit 25%igem Ammoniak und 50 Teilen Wasser auf den pH-Wert 8,5 eingestellt.

2.2 Herstellung der Klarlacke unter Verwendung der Copolymerisatlösungen der Beispiele 5 bis 7.

Die 66,6%igen Lösungen der Copolymerisate aus den Beispielen 5 bis 7 werden mit 25%igem Ammoniak, 50 Teilen Wasser und 100 Teilen Isopropanol auf den pH-Wert 8,5 eingestellt.

3. Prüfungen

3.1 Die so erhaltenen Klarlacke werden mit einer Kästchenrakel auf Glasplatten aufgebracht und 3 Stunden bzw. 3 Tage bei 23°C und 50% rF (= relative Feuchtigkeit) getrocknet. Die getrockneten Lackfilme weisen eine Schichtdicke von 30 µm auf. Zur Beurteilung der Wasserfestigkeit werden diese Filme 1 Stunde bei 23°C in Wasser gelagert.

3.2 Zur Bestimmung des Wasseraufnahmevermögens werden die Klarlacke gemäss der Beispiele 2.2 auf Aluminiumfolie gerakelt (Trockenfilmdicke: 40 µm), 7 Tage bei 50°C getrocknet und 2 Tage bei 23°C in Wasser gelagert. Die abgetrocknete Folie wird anschliessend ausgewogen und mit deren Gewicht vor der Wasserlagerung verglichen. Der Quellverlust wird durch 5 stündiges Trocknen der im Wasser gelagerten Filme bei 50°C und Vergleich dieses Gewichts mit dem vor der Wasserlagerung ermittelt. Für die Copolymerisate der Beispiele 1 bis 4 wird ebenso verfahren, jedoch Butylglykol durch Isopropanol ersetzt und die Lackfilme 7 Tage bei 40°C getrocknet.

Die Ergebnisse der Prüfungen sind in Tabelle 4 dargestellt. Analog Beispiel 3 wurde ein Vergleichsbeispiel 3b durchgeführt, in dem bei sonst gleichen Bedingungen als Neutralisationsmittel für wasserverdünnbare Bindemittel das gebräuchliche Triethylamin verwendet wurde. Die Prüfungsergebnisse befinden sich ebenfalls in Tabelle 4.

4. Kontrolle der Wasserverdünnbarkeit der Klarlacke aus den Beispielen 1 bis 7.

Die Klarlacke aus 150 Teilen der 66,6%igen Lösungen in Butylglykol werden mit 150 Teilen Wasser und 25%igem Ammoniak auf pH 8,5 bis 9,0 eingestellt.

Die 50%ige Lösung des Beispiels 8 wird mit 50 Teilen Butylglykol und 50 Teilen Wasser verdünnt und ebenfalls mit 25%igem Ammoniak auf pH 8,5 eingestellt.

Die Lösungen der Copolymerisate lassen sich mit Wasser bis auf Bindemittelkonzentrationen von unter 15% verdünnen, ohne dass Bindemittelausflockungen oder 2-Phasenbildung bei Lagerung der Verdünnungen auftreten. Die Lösungen dieser Copolymerisate weisen bei 25%iger Konzentration höchstens eine geringfügige Trübung auf. In 15%iger Konzentration sind lediglich die Lösungen der Copolymerisate 4, 5 und 8 etwas trüb, aber lagerstabil.

5. Anwendungsbeispiele

5.1 Zur Herstellung einer Glanzfarbe werden 150 Teile der Copolymerisatlösung des Beispiels 6 mit 100 Teilen Isopropanol, 50 Teilen Wasser und 25%igem Ammoniak auf pH 8,3 eingestellt. Dieser Klarlack wird mit 50 Teilen Rutil und 2 Teilen Phthalocyaninblau abgerieben.

Tabelle 4
Prüfergebnisse:

| Beispiel Nr. | 1 | 2 | 3 | 4 | 5 | 6 | 7 | Vergleichs-beispiel 3b |
|---|---|---|---|---|---|---|---|---|
| 3.1 Wasserfestigkeit | | | | | | | | |
| a) nach 3 Stunden: | | | | | | | | |
| Erweichung des Films | 2 | 2 | 2 | 1 | 1 | 1 | 2 | 4 |
| Filmtrübung | 2 | 2 | 2 | 1 | 1 | 0 | 3 | 0 |
| b) nach 3 Tagen | | | | | | | | |
| Filmerweichung | 0 | 0 | 0 | 0 | 0 | 0 | 0 | 4 |
| Filmtrübung | 0 | 0 | 0 | 0 | 0 | 0 | 0 | 0 |
| 3.2 Wasseraufnahme | | | | | | | | |
| (Gew.%) | 1 | 5 | 2 | 0,5 | 1 | 2 | 2 | 75 |
| Quellverlust | | | | | | | | |
| (Gew.%) | 0,2 | 0,2 | 0,2 | 0,3 | 0,2 | 0,2 | 0,2 | 1 |
| Filmtrübung | 0 | 0 | 0 | 0 | 0 | 0 | 0 | 4 |

0 = keine Veränderung
1 = kaum merkliche Veränderung
2 = geringe Veränderung
3 = mässige Veränderung
4 = starke Veränderung

Aus den Beispielen erkennt man deutlich die Überlegenheit der besonders bevorzugten Isobutylmethacrylat-Copolymerisate und des erfindungsgemäss als Neutralisationsmittel zu verwendenden Ammoniaks.

Die Farbe lässt sich mit Wasser verdünnen. Ihre Anstriche zeichnen sich neben hohem Glanz durch hervorragende Haftfestigkeit auf Metallen, wie insbesondere Stahlblech, Aluminium und verzinktem Stahl aus.

5.2 Eine Strassenmarkierungsfarbe wird aus 100 Teilen Copolymerisat 3 durch Lösen in 20 Teilen Butylglykol, 150 Teilen Isopropanol, 5,0 Teilen 25%igem wässrigem Ammoniak und 50 Teilen Wasser und anschliessendes Pigmentieren mit 100 Teilen Rutil, 50 Teilen Microcalcit und 200 Teilen Kristobalitmehl und 40 Teilen einer 10%igen Paste von Montmorillonit in Wasser hergestellt. Sie zeichnet sich durch kurze Trockenzeiten und gute Haltbarkeit im Strassenverkehr aus.

5.3 Eine Masse zum Verputzen von Mauerwerk und ähnlichen mineralischen Untergründen wird hergestellt durch Vermengen einer Lösung aus 150 Teilen der Copolymerisatlösung des Beispiels 6 in 7,0 Teilen 25%igem wässrigem Ammoniak, 10 Teilen eines mit Butanol vollständig veretherten flüssigen, lösungsmittelfreien Melamin-Formaldehydharzes als Weichmacher und 150 Teilen Wasser mit 100 Teilen Rutil, 40 Teilen Microcalcit, 500 Teilen grobem Calcit (0,05 bis 0,5 mm) und 100 Teilen einer 10%igen Paste von Montmorillonit in Wasser.

Die Masse lässt sich dickschichtig auf mineralischen Putzfassaden und Mauerwerk aufspachteln, ist bereits nach kurzem Antrocknen wasserabweisend und bietet einen guten Schutz gegen Witterungseinflüsse.

5.4 Eine Fassadenfarbe wird aus einer Lösung von 150 Teilen 66,6%iger Polymerisatlösung des Beispiels 6 und 20 Teilen Butylglykol, 7,0 Teilen 25%igem Ammoniak und 250 Teilen Wasser durch Abmischen mit 120 Teilen Rutil, 300 Teilen Dolomit und 40 Teilen einer 10%igen Paste von Montmorillonit in Wasser erhalten.

Die Farbe ist nach kurzer Antrocknungsdauer wasserabweisend und eignet sich hervorragend zum Schutz von mineralischen Fassaden gegen Witterungseinflüsse und Eindringen von Schlagregen.

5.5 Eine Imprägniergrundierung für Mauerwerk und ähnliche saugende mineralische Untergründe wird durch Lösen von 100 Teilen Copolymerisat 3 in 400 Teilen Isopropanol, 5 Teilen 25%igem Ammoniak und 400 Teilen Wasser hergestellt.

Die Lösung dringt schnell in saugende Untergründe ein. Die Grundierungen eignen sich ausgezeichnet zur Hydrophobierung und Verfestigung lockerer Untergründe und zur Haftvermittlung für nachfolgende herkömmliche Anstrichstoffe, wie z.B. lösungsmittelhaltige Farben oder Dispersionsfarben.

5.6 Eine Glanzfarbe für Rostschutzdeckanstriche wird durch Verdünnen von 150 Teilen von Copolymerisatlösung 5 mit 30 Teilen Butanol und 70 Teilen Isopropanol, 4,9 Teilen 25%igem Ammoniak und 50 Teilen Wasser und anschliessendes Pigmentieren mit 90 Teilen Rutil und 4 Teilen Phthalocyanin-Blau hergestellt.

Diese Korrosionsschutzfarbe bietet bereits, ohne Mitverwendung von aktiven Rostschutzpigmenten, einen hervorragenden Schutz für Metalle gegen Korrosion, wie z.B. eine vergleichende Korrosionsprüfung bei einer Trockenfilmdicke von

40 µm auf Tiefziehblech im Salzsprühtest nach DIN 50 021 zeigt.

Nach 300 Stunden Salzsprühbeanspruchung ist keine Unterrostung unter dem Anstrich und am Schnitt erkennbar.

Ein Anstrich dieser Glanzfarbe zeichnet sich weiterhin durch hohe Filmhärte und gute Filmdehnbarkeit im Erichsen-Tiefungsgerät sowie hohen Glanz aus.

Er ist nach Durchtrocknung sehr haftfest auf Metallen, wie Stahl, Zink und Aluminium, auf vielen Kunststoffen, wie PVC, Polystyrol, Polymethylenmethacrylat und verschiedenartigen Anstrichuntergründen sowie bituminösen Werkstoffen.

Die Farbe 5.6 mit Chromoxidgrün anstelle von Phthalocyaninblau eignet sich ausgezeichnet als Schutzanstrich für bituminenhaltige Beläge gegen Verwitterung und übermässige Erwärmung bei Sonneneinstrahlung, z.B. als Flachdachanstrich, aufgrund seiner hohen Wasserresistenz, seiner guten Haftfestigkeit und der Beständigkeit gegen Durchbluten von dunklen Teerinhaltsstoffen beim Aufbringen der Farbe.

5.7 400 Teile eines Weisslackes a) aus 100 Teilen Copolymer Beispiel 1 gelöst in 100 Teilen Butylglykol, 150 Teilen Wasser unter Neutralisation mit 25%igem Ammoniak auf pH 9,0 und pigmentiert mit 50 Teilen Rutil werden mit 400 Teilen einer herkömmlichen Dispersionsfarbe b) auf der Basis eines ähnlich zusammengesetzten Copolymerisats wie es unter dem Handelsnamen "Acronal 18 D im Handel ist, und gleichem Pigment und Bindemittelgehalt abgemischt.

Die Kombination aus a) und b) ergibt nach Durchtrocknung an der Luft Anstriche, die sich gegenüber dem in gleicher Trockenschichtdicke hergestellten Anstrich aus b) allein durch erhöhten Glanz, höhere Filmhärte bessere Haftfestigkeit auf Metallen, geringere Wasseraufnahme und Wasserdampfdurchlässigkeit sowie verbesserten Korrosionsschutz im Salzsprühtest auszeichnen.

5.8 Ein Klarlack aus 100 Teilen Copolymerisat des Beispiels 7 in 50 Teilen Butylglykol und 300 Teilen deionisiertem Wasser, neutralisiert mit 25%igem Ammoniak auf pH 9,0 dient als Holzlasur.

Beispiel 9

Analog zu Beispiel 3 wird ein Copolymerisat aus 56 Teilen Methylmethacrylat, 41,3 Teilen Isobutylacrylat und 2,7 Teilen Itaconsäure mit 1,5 Teilen t-BPB als Initiator hergestellt. Das Copolymerisat weist einen K-Wert von 28 und eine Säurezahl von 23 auf. Der Wert für E beträgt 36,0 und der für A somit 193.

Die 66,6%ige Lösung dieses Harzes in Butylglykol ist nach Neutralisation mit 25%igem Ammoniak auf pH 8,7 mit Wasser auf eine Bindemittelkonzentration von unter 15% verdünnbar, ohne dass Bindemittelausflockung, Zweiphasenbildung oder eine starke Trübung zu beobachten sind.

Ein ebenso hergestellter Klarlack, mit Wasser auf 25%ige Polymerisatkonzentration eingestellt, trocknet auf Glas in einer Trockenschichtdicke von 0,030 mm bei 23 °C und 50%iger rel. Feuchte bereits innerhalb von 3 Stunden zu einem Lackfilm auf, der nach 1-stündiger Wasserbeanspruchung keine bleibenden sichtbaren Veränderungen, wie Trübungen, Mattierungen oder Runzelbildung mehr zeigt. Die lösungsmittelfrei durchgetrockneten Lackfilme sind ausserdem ausgezeichnet gegen die Einwirkung von wässrigem Ammoniak und 1-normaler Natronlauge beständig.

Beispiel 10

Ein analog Beispiel 9 hergestelltes Copolymerisat aus 56 Teilen Methylmethacrylat, 39 Teilen Isobutylacrylat und 5 Teilen Maleinsäureanhydrid weist einen K-Wert von 32 auf.

a) 100 Teile dieses Copolymerisats werden in 75 Teilen Isopropanol 3 Stunden bei 80 °C gelöst. Die Säurezahl des gelösten, Maleinsäuremonoisopropylestergruppen enthaltenden Copolymerisats beträgt 32 mg/KOH/g. E errechnet sich für dieses Produkt auf 35,8 und A auf 208.

Diese isopropanolische Lösung wird beim Erwärmen auf über + 33 °C klar. Nach Neutralisation mit 25%igem Ammoniak auf pH 8,3 und Zugabe von 150 Teilen entionisiertem Wasser wird eine klare, viskose Lösung erhalten, die sich mit weiterem Wasser ohne Ausfällung des Polymerisats und ohne Trübung auf Polymerisatkonzentration von unter 10% verdünnen lässt.

Nach Zugabe von 25 Teilen Butylglykol zur viskosen Lösung erhält man einen Klarlack, der in Trockenschichtdicken von 0,030 mm in wenigen Stunden zu einem sehr wasserbeständigen und alkalibeständigen Lackfilm durchtrocknet.

b) 100 Teile des gleichen Copolymerisats ebenso gelöst in 50 Teilen Butylglykol ergibt die folgenden Werte für das Halbestergruppen enthaltende Copolymerisat:
SZ = 31 mg KOH/g, E = 35,4% und A = 206. Die mit 25%igem Ammoniak und entionisiertem Wasser auf 23%ige Copolymerisatkonzentration und pH 9,0 eingestellte Klarlacklösung lässt sich mit Wasser auf Konzentrationen von unter 10% ohne Trübung verdünnen. Der Klarlack trocknet auf Glas bei 23°C und 50% rel. Feuchte und innerhalb von 5 Stunden zu einem Lackfilm von 0,03 mm Trockenschichtdicke auf, der durch 1-stündige Wassereinwirkung keine bleibenden Schäden mehr erfährt.

Beispiel 11

Ein analog Beispiel 9 hergestelltes Harz aus 15 Teilen Methylmethacrylat, 20 Teilen Styrol, 60 Teilen n-Butylacrylat und 5 Teilen Acrylsäure weist einen K-Wert von 30, einen Erweichungspunkt nach DIN 53 180 von 55 °C und eine Säurezahl von 38 auf. E ist 27,2 und A somit 201.

Seine 66%ige Lösung in Butylglykol ist nach Neutralisation auf pH-Wert über 8,5 trübungsfrei mit Wasser verdünnbar. Die durchgetrockneten Filme dieser wasserhaltigen Lösungen zeichnen sich durch gute Wasserquellbeständigkeit und Resistenz gegen wässrigen Ammoniak und verdünnte Natronlauge aus.

## Patentansprüche

1. Copolymerisat, im wesentlichen bestehend aus einpolymerisierten Einheiten von

a) 67–98 Gew.-% mindestens eines Esters der Acrylsäure oder Methacrylsäure mit einem 1 bis 14 Kohlenstoffatome enthaltenden geradkettigen oder verzweigten Monoalkanol,

b) 2 bis 20 Gew.-% mindestens einer copolymerisierbaren, olefinisch ungesättigten 3 bis 10 Kohlenstoffatome enthaltenden Verbindung mit mindestens einer Carboxyl- oder Carbonsäureanhydridgruppe,

c) 0 bis 31 Gew.-% eines Vinylaromaten und

d) 0 bis 5 Gew.-% weiterer, unter a) bis c) nicht genannter α,β-ethylenisch ungesättigter Verbindungen,

mit der Massgabe, dass die Summe der unter a) bis d) genannten Prozentzahlen gleich 100 ist, dadurch gekennzeichnet, dass das Copolymerisat einen K-Wert nach DIN 53 726 von 18 bis 60 aufweist und die Komponenten a), b), c) und d) in einem solchen Verhältnis einpolymerisiert enthält, dass dem Copolymerisat ein A-Wert zwischen 180 und 220 entspricht, wobei der A-Wert sich aus folgender Gleichung berechnen lässt

$$100 \cdot \log SZ + 1{,}6 \cdot \sum_{i=1}^{n} E_i = A$$

worin

SZ die Säurezahl in mg KOH/g Copolymerisat und

$$\sum_{i=1}^{n} E_i$$

die Summe der korrigierten Anteile $E_1$ bis $E_n$ der jeweiligen Alkyl(Meth)Acrylatcomonomere a)1 bis a)n an COO-Gruppierungen, jeweils in Gew.% bezogen auf das Copolymerisat bedeuten und diese Gew.%-Anteile so korrigiert werden, dass sie für Ester in α-Stellung verzweigter Alkanole mit dem Faktor 0,7 bzw. für Ester in β-Stellung verzweigter Alkanole mit dem Faktor 0,8 multipliziert worden sind.

2. Copolymerisat nach Anspruch 1, dadurch gekennzeichnet, dass als Komponente (b) 2 bis 15 Gew.-% Acrylsäure, Itaconsäure und/oder Maleinsäureanhydrid verwendet wird, das Copolymerisat einen Erweichungspunkt nach DIN 53 180 von 55 bis 150 °C aufweist und A für eine Zahl zwischen 190 und 220 steht.

3. Copolymerisat nach Anspruch 1 oder 2, dadurch gekennzeichnet, dass A für eine Zahl zwischen 195 und 205 steht.

4. Verwendung des Copolymerisats nach einem der vorhergehenden Ansprüche, wobei das Copolymerisat in mit Wasser zumindest teilweise mischbarem organischen Lösungsmittel gelöst und mit Ammoniak zumindest teilweise neutralisiert ist, als Bindemittel für wasserverdünnbare, physikalisch trocknende Zusammensetzungen.

5. Verwendung nach Anspruch 4 gegebenenfalls in Abmischung mit Anstrichdispersionen für Anstrichstoffe und Imprägniermittel.

## Claims

1. A copolymer which consists essentially of polymerized units of

a) from 67 to 98% by weight of one or more esters of acrylic acid or methacrylic acid with a straight-chain or branched monoalkanol of 1 to 14 carbon atoms,

b) from 2 to 20% by weight of one or more copolymerizable olefinically unsaturated compounds containing 3 to 10 carbon atoms and one or more carboxyl or carboxylic acid anhydride groups,

c) from 0 to 31% by weight of a vinyl-aromatic, and

d) from 0 to 5% by weight of other α,β-ethylenically unsaturated compounds, not mentioned under a) to c),

with the proviso that the sum of their percentages mentioned under a) to d) is 100, which copolymer has K value, according to DIN 53,726, of from 18 to 60 and contains components a), b), c) and d) as polymerized units in such a ratio that the copolymer has an A value of from 180 to 220, which value can be calculated according to the following equation

$$100 \cdot \log SZ + 1{,}6 \cdot \sum_{i=1}^{n} E_i = A$$

where SZ is the acid number in mg of KOH/g of copolymer and

$$\sum_{i=1}^{n} E_i$$

is the sum of the corrected contents $E_1$–$E_n$, each in percent by weight based on the copolymer, of COO groups in the particular alkyl (meth)acrylate comonomers a)1–a)n, these contents in percent by weight being corrected by multiplying them by a factor of 0.7 for esters of α-branched alkanols and by a factor of 0.8 for esters of β-branched alkanols.

2. A copolymer as claimed in claim 1, wherein from 2 to 15% by weight of acrylic acid, itaconic acid and/or maleic anhydride is used as component (b), the copolymer has a softening point, according to DIN 53,180, of from 55 to 150 °C, and A is from 190 to 220.

3. A copolymer as claimed in claim 1 or 2, wherein A is from 195 to 205.

4. The use of a copolymer as claimed in any of the preceding claims, the copolymer being dissolved in an organic solvent which is at least partially miscible with water, and the solution being at least partially neutralized with ammonia, as binder for water-dilutable, physically drying compositions.

5. The use as claimed in claim 4, the copolymer being optionally mixed with a dispersion for surface coatings, for paints and/or impregnating agents.

## Revendications

1. Copolymère, constitué essentiellement d'unités copolymérisées de

a) 67 à 98% en poids d'au moins un ester de l'acide acrylique ou de l'acide méthacrylique et d'un monol en $C_1$ à $C_{14}$ à chaîne droite ou ramifiée,

b) 2 à 20% en poids d'au moins un composé en $C_3$ à $C_{10}$ à insaturation oléfinique copolymérisable, comprenant au moins un groupe carboxyle ou anhydride carboxylique,

c) 0 à 31% en poids d'un composé vinyl-aromatique et

d) 0 à 5% en poids d'autres composés à insaturation $\alpha,\beta$-éthylénique non cités sub a) à c),
étant entendu que la somme des pourcentages de a) à d) est égale à 100, caractérisé en ce qu'il possède une valeur K selon la norme DIN 53 726 comprise entre 18 et 60 et les composants a), b), c) et d) y sont copolymérisés dans des proportions telles que le polymère possède une valeur A comprise entre 180 et 220, cette valeur A étant calculée à l'aide de l'équation

$$A = 100 \cdot \log SZ + 1{,}6 \cdot \sum_{i=1}^{n} E_i \quad ,$$

dans laquelle

SZ est l'indice d'acide en mg de KOH par gramme de copolymère et

$$\sum_{i=1}^{n} E_i$$

la somme des fractions $E_1$ à $E_n$ corrigées en groupes COO- des comonomères (méth)acrylate d'alkyle a)1 à a)n correspondants, exprimées en % en poids par rapport au copolymère, la correction consistant à multiplier ces pourcentages en poids par le facteur 0,7 dans le cas des esters d'alcanols ramifiés en position $\alpha$ et par le facteur 0,8 pour les esters d'alcanols ramifiés en position $\beta$.

2. Copolymère suivant la revendication 1, caractérisé en ce que le composant (b) est constitué de 2 à 15% en poids d'acide acrylique, d'acide itaconique et(ou) d'anhydride maléique, il possède un point de ramollissement selon la norme DIN 53 180 compris entre 55 et 150°C et sa valeur A est comprise entre 190 et 220.

3. Copolymère suivant la revendication 1 ou 2, caractérisé en ce que sa valeur A est comprise entre 195 et 205.

4. Utilisation d'un copolymère suivant l'une des revendications précédentes, dissous dans un solvant organique au moins partiellement miscible à l'eau et au moins partiellement neutralisé par de l'ammoniac, comme liant dans des compositions pouvant être diluées par de l'eau et séchant physiquement.

5. Utilisation suivant la revendication 4, éventuellement en mélange avec des dispersions d'enduction pour peintures et agents d'imprégnation.